# FASCICULE DE BREVET EUROPEEN

(11) **EP 3 436 762 B1**
(45) Date de publication et mention de la délivrance du brevet: **08.01.2020**
(21) Numéro de dépôt: 17825901.6
(22) Date de dépôt: 12.12.2017
(51) Int. Cl.: F28F 9/02, F28F 19/00, B60R 19/52, F28D 21/00, F28D 1/053

(54) **DISPOSITIF D'ÉCHANGE DE CHALEUR COMPORTANT UN DISPOSITIF DE PROTECTION**
WÄRMETAUSCHVORRICHTUNG MIT EINER SCHUTZVORRICHTUNG
HEAT EXCHANGE DEVICE COMPRISING A PROTECTIVE DEVICE

(30) Priorité: 12.12.2016 FR 1662281
(43) Date de publication de la demande: 06.02.2019
(73) Titulaire: Valeo Systemes Thermiques, 78322 Le Mesnil Saint-Denis Cedex (FR)
(72) Inventeur: NGUYEN, Dinh-Luyen, 78322 Le Mesnil Saint Denis Cedex (FR)
(74) Mandataire: Tran, Chi-Hai
(86) Numéro de dépôt international: PCT/FR2017/053525
(87) Numéro de publication internationale: WO 2018/109367

(56) Documents cités:
- EP-A1- 2 011 976
- EP-A1- 2 495 521
- WO-A1-98/50751
- WO-A1-2016/177826
- WO-A1-2016/177831
- JP-A- 2011 162 092
- US-A- 5 042 575
- US-B1- 6 810 950

## Description

L'invention concerne un dispositif d'échange de chaleur pour véhicule automobile comportant un échangeur thermique et un dispositif de protection de l'échangeur thermique. L'invention se rapporte également à un procédé d'assemblage d'un tel dispositif d'échange de chaleur. L'invention vise plus particulièrement un dispositif d'échange de chaleur placé en face avant d'un véhicule automobile.

Dans le domaine automobile, les échangeurs thermiques placés en face avant peuvent être victimes de projections de débris, notamment de pierres, qui peuvent endommager l'échangeur thermique. Notamment, ces débris peuvent percer les tubes de l'échangeur thermique, à l'intérieur desquels circule un fluide à refroidir au moyen du flux d'air créé par le véhicule automobile roulant.

Afin de protéger ces échangeurs thermiques, il est connu de placer devant eux, dans le sens de la marche normale du véhicule automobile, un dispositif de protection pouvant absorber les chocs dus aux projections de débris. Le dispositif de protection est notamment une grille.

Ainsi, par exemple, dans le document US-A-2007/080009, il est proposé de fixer le dispositif de protection sur le pare-chocs du véhicule automobile.

Le document US-A-2005/029028 enseigne pour sa part de fixer le dispositif de protection sur un cadre disposé en amont, par rapport au sens du flux d'air traversant l'échangeur thermique, du faisceau de tubes.

Enfin, la demande JP 2012 229 907 décrit un dispositif d'échange de chaleur comportant une grille fixée sur les boites à eau de l'échangeur thermique, disposées de part et d'autre du ou des faisceaux de tubes traversés par le fluide à refroidir.

Ces modes de fixation du dispositif de protection sont encombrants, en ce sens qu'ils augmentent sensiblement le volume occupé par le dispositif d'échange de chaleur constitué de l'échangeur thermique et du dispositif de protection.

Par ailleurs, la demande FR 15 54 049, au nom de la demanderesse, décrit un dispositif d'échange de chaleur, dans le cas duquel le dispositif de protection comporte des pics de fixation s'étendant sensiblement perpendiculairement à la grille, les pics de fixation étant insérés en force entre des ailettes séparant les tubes du faisceau de tubes. Les ailettes peuvent cependant se déformer ce qui peut nuire à la fixation du dispositif de protection.

Enfin, la demande FR 15 54 050, toujours au nom de la demanderesse, décrit un dispositif d'échange de chaleur muni d'une grille de protection avec des crochets. La grille de protection est placée en vis-à-vis de la face avant de l'échangeur thermique, de telle sorte que les crochets chevauchent les faces latérales de l'échangeur thermique et viennent en prise avec la face arrière de cet échangeur thermique. Cependant, ce dispositif induit un encombrement accru par rapport au seul échangeur thermique.

Il existe donc un besoin pour un dispositif d'échange de chaleur ne présentant pas au moins certains inconvénients des dispositifs de l'art antérieur.

À cette fin, l'invention propose un dispositif d'échange de chaleur pour véhicule automobile comprenant :
- un échangeur thermique, avec
   o une première plaque collectrice et une deuxième plaque collectrice, s'étendant principalement selon une direction longitudinale,
   o une première boîte à eau, fixée sur la première plaque collectrice, et une deuxième boîte à eau, fixée sur la deuxième plaque collectrice, et
   ∘ au moins un faisceau de tubes s'étendant entre les première et deuxième plaques collectrices selon une direction longitudinale des tubes,
   ∘ chacune de la première et de la deuxième plaque collectrice formant, entre les tubes du faisceau de tubes et une extrémité latérale de la plaque collectrice respective, une gorge s'étendant sensiblement selon la direction longitudinale de la plaque collectrice respective, perpendiculairement à la direction longitudinale des tubes, et
- un dispositif de protection des tubes du faisceau de tubes, ajouré, comprenant des moyens de fixation sur l'échangeur thermique, les moyens de fixation prenant appui à l'intérieur des gorges formées par les première et deuxième plaques collectrices.

Ainsi, le dispositif de protection est fixé directement sur l'échangeur thermique. Avantageusement, il est ainsi possible de conformer le dispositif de protection de telle sorte qu'il ne fasse pas saillie latéralement de l'échangeur thermique, et, qu'ainsi, l'encombrement du dispositif d'échange de chaleur soit limité.

Cette fixation sur les plaques collectrices est par ailleurs robuste, en particulier lorsque les plaques collectrices sont en matériau métallique.

Selon des modes de réalisation préférés, le dispositif d'échange de chaleur selon l'invention présente une ou plusieurs des caractéristiques suivantes, prises seules ou en combinaison :
- les moyens de fixation comprennent au moins un relief d'emboîtage élastique reçu dans l'une parmi la gorge de la première plaque collectrice et la gorge de la deuxième plaque collectrice, les moyens de fixation comprenant de préférence une pluralité de tels reliefs d'emboîtage élastique reçus dans l'une parmi la gorge de la première plaque collectrice et la gorge de la deuxième plaque collectrice, lesdits reliefs d'emboîtage élastique étant de préférence encore équirépartis ;
- les moyens de fixation comprennent également au moins un relief d'emboitage élastique reçu dans l'autre parmi la gorge de la première plaque collectrice et la gorge de la deuxième plaque collectrice, les moyens de fixation comprenant de préférence une pluralité de tels reliefs d'emboîtage élastique reçus dans l'autre parmi la gorge de la première plaque collectrice et la gorge de la deuxième plaque collectrice, lesdits reliefs d'emboîtage élastiques étant de préférence encore équirépartis ;
- les moyens de fixation comprennent également au moins un relief d'appui reçu en appui dans l'autre parmi la gorge de la première plaque collectrice et la gorge de la deuxième plaque collectrice, les moyens de fixation comprenant de préférence une pluralité de tels reliefs d'appui reçus dans l'autre parmi la gorge de la première plaque collectrice et la gorge de la deuxième plaque collectrice, les reliefs d'emboîtage élastiques étant de préférence encore équirépartis ;

- le dispositif de protection a des jours, les jours s'étendant parallèlement aux tubes du faisceau de tubes, les jours étant, de préférence, décalés par rapport aux tubes, dans une direction parallèle à la direction longitudinale de la première et/ou de la deuxième plaque collectrice ;
- le dispositif de protection comporte une grille, la grille ayant de préférence des barreaux, la grille comportant de préférence encore des barreaux s'étendant selon une direction parallèle aux tubes et/ou des barreaux s'étendant perpendiculairement à la direction des tubes ;
- la grille comporte autant de barreaux s'étendant parallèlement aux tubes, que le faisceau de tubes ne comporte de tubes ;
- le dispositif d'échange de chaleur comprend en outre une pièce rapportée s'étendant au moins en partie autour du dispositif de protection ;
- la pièce rapportée est un guide d'air, notamment un guide d'air du type convergent ;
- la pièce rapportée est fixée sur la première et/ou la deuxième boîte à eau ;
- la pièce rapportée comporte des reliefs d'emboîtage élastique sur la première et/ou la deuxième boîte à eau, la première et/ou la deuxième boîte à eau comportant de préférence des reliefs complémentaires auxdits reliefs d'emboîtage élastique de la pièce rapportée ; et
- le dispositif de protection et/ou la pièce rapportée, le cas échéant, est/sont en matière plastique, notamment en polyamide ou en polypropylène.

Selon un autre aspect, l'invention se rapporte à un procédé d'assemblage d'un dispositif d'échange de chaleur tel que décrit ci-avant dans toutes ses combinaisons, comprenant une étape de fixation du dispositif de protection, à l'intérieur des gorges formées par les première et deuxième plaques collectrices.

Selon une première variante, l'étape de fixation du dispositif de protection comporte une étape consistant à emboîter élastiquement les reliefs d'emboitage élastique dans la gorge de la première plaque collectrice et dans la gorge de la deuxième plaque collectrice, de préférence de manière sensiblement simultanée.

Selon une deuxième variante, l'étape de fixation du dispositif de protection comporte une première étape d'insertion des reliefs d'appui dans la gorge de l'une parmi la première plaque collectrice et la deuxième plaque collectrice, puis une étape de pivotement du dispositif de protection, et enfin une étape d'emboîtage élastique des reliefs d'emboitage élastique dans la gorge de l'autre parmi la première plaque collectrice et la deuxième plaque collectrice.

De préférence, le procédé d'assemblage comporte en outre une étape de fixation d'une pièce rapportée, notamment d'un guide d'air, sur les boîtes à eau, la pièce rapportée étant de préférence fixée au moins en partie par emboîtement élastique sur l'une des boîtes à eau.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente en perspective un premier exemple de dispositif d'échange de chaleur ;
- la figure 2 représente schématiquement de face, un échangeur thermique pouvant être mis en œuvre dans le dispositif d'échange de chaleur de la figure 1 ;
- la figure 3 représente schématiquement en coupe selon le plan III, l'échangeur thermique de la figure 2 ;
- la figure 4 est une vue en perspective d'un dispositif de protection pouvant être mis en œuvre dans le dispositif d'échange de chaleur de la figure 1 ;
- les figures 5A à 5F illustrent les étapes du montage du dispositif de protection de la figure 4 sur l'échangeur thermique de la figure 2 ;
- la figure 6 est une vue en perspective d'un guide d'air du type convergent, pouvant être mis en œuvre dans le dispositif d'échange de chaleur de la figure 1 ;
- les figures 7A à 7D illustrent schématiquement des détails de la fixation du guide d'air de la figure 6, sur l'échangeur thermique de la figure 2, muni d'un dispositif de protection ; et
- la figure 8 illustre schématiquement en coupe longitudinale, un deuxième exemple de dispositif d'échange de chaleur.

Sur les différentes figures, les éléments identiques ou de fonction identique portent les mêmes numéros de référence. Ces éléments ne sont pas décrits dans le cas de chaque exemple. Au contraire, à fin de concision de la description, seules les différences entre les différents exemples sont décrites en détails.

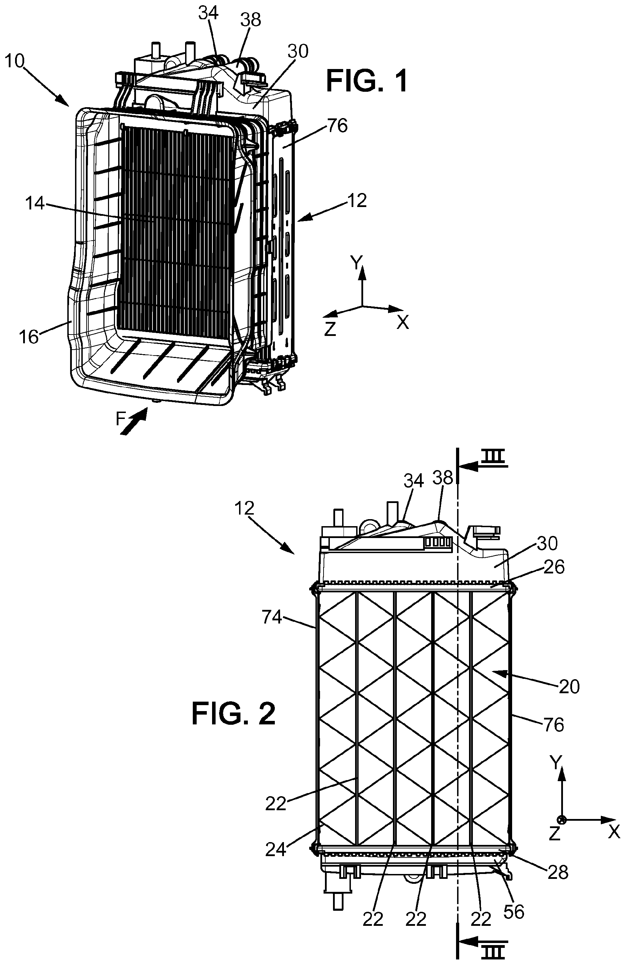

La figure 1 illustre un premier exemple de dispositif d'échange de chaleur 10. Celui-ci comporte essentiellement un échangeur thermique 12, un dispositif de protection 14 de l'échangeur thermique 12, et une pièce rapportée 16 sur l'échangeur thermique 12.

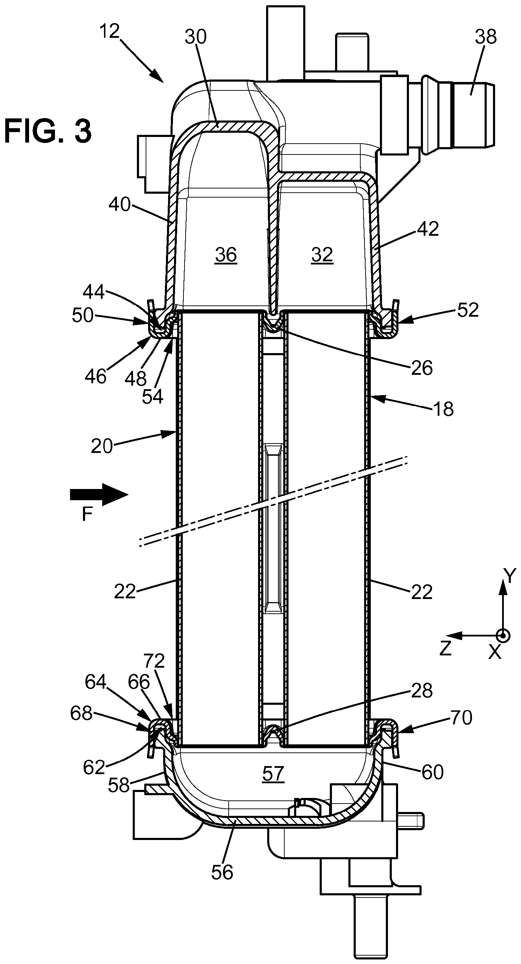

L'échangeur thermique 12 est plus nettement visible aux figures 2 et 3. Il comprend deux faisceaux 18, 20 de tubes 22, destinés à être parcourus par un fluide à refroidir, les tubes 22 d'un même faisceau 18, 20 étant séparés par des ailettes 24.

Le premier faisceau de tubes 18 est disposé parallèlement au deuxième faisceau de tubes 20, décalé dans la direction du flux d'air F formé par le véhicule lorsqu'il roule. Les tubes 22 des deux faisceaux 18, 20 s'étendent principalement selon une direction longitudinale Y commune, entre une première plaque collectrice 26 et une deuxième plaque collectrice 28. Chaque plaque collectrice 26, 28, s'étend principalement selon une direction longitudinale X. Les plaques collectrices 26, 28 sont ici parallèles, perpendiculaires à la direction longitudinale Y des tubes.

Une première boîte à eau 30 est fixée sur la première plaque collectrice 26. Cette boîte à eau 30 consiste ici en un capot, de préférence en matière plastique. Ici, cette première boîte à eau 30 délimite un premier volume 32 en communication de fluide avec, d'une part, une entrée de fluide 34 de l'échangeur thermique 12, formée par la première boîte à eau 30, et, d'autre part, le premier faisceau de tubes 18. Le premier faisceau de tubes 18 est avantageusement celui qui est destiné à être en contact avec le flux d'air F, après que celui-ci ci ait traversé le deuxième faisceau de tubes 20. La première boîte à eau 30 forme également un deuxième volume 36, en communication de fluide avec, d'une part, une sortie de fluide 38, formée par la première boite à eau 30, et, d'autre part, avec le second faisceau de tubes 20.

Comme cela est plus particulièrement visible sur la figure 3, les parois latérales 40, 42 de la première boîte à eau 30 sont reçues dans une rainure 44 de la première plaque collectrice 26, formée par un pli ou embossage 46 de la première plaque collectrice 26. Cette première rainure 44 s'étend sur sensiblement tout le contour de la première plaque collectrice 26. La rainure 44 de la première plaque collectrice 26 peut recevoir un joint d'étanchéité interposé entre les parois latérales 40, 42 de la première boîte à eau 30 et la première plaque collectrice 26, pour limiter voire éviter toute fuite de liquide hors des volumes 32, 36 formés à l'intérieur de la première boîte à eau 30.

Du côté opposé aux parois latérales 40, 42 de la première boîte à eau 30, l'embossage 46 de la première plaque collectrice 26 forme une nervure saillante 48 s'étendant entre les tubes 22 des premier et deuxième faisceau 18, 20 et une extrémité latérale 50, 52 de la première plaque collectrice 26. Cette nervure saillante 48 définit notamment, au niveau de l'extrémité latérale 50 de la première plaque collectrice 26, destinée à être orientée vers l'avant du véhicule (c'est-à-dire, ici, l'extrémité latérale 50 de la première plaque collectrice 26 qui est la plus proche du deuxième faisceau de tubes 20) une gorge 54, qui s'étend entre la nervure saillante 48 et les tubes 22 du deuxième faisceau de tubes 20. Cette gorge 54 s'étend essentiellement selon la direction longitudinale X de la première plaque collectrice 26 et donc perpendiculairement aux tubes 22 du deuxième faisceau de tubes 20.

De manière similaire, une deuxième boîte à eau 56 est fixée sur la deuxième plaque collectrice 28. Cette deuxième boîte à eau consiste ici en un capot, de préférence en matière plastique. La deuxième boîte à eau 28 définit ici un volume 57 en communication de fluide avec la sortie des tubes 22 du premier faisceau de tubes 18, d'une part, et avec l'entrée des tubes 22 du deuxième faisceau de tubes 20, par ailleurs.

Les parois latérales 58, 60 de la deuxième boîte à eau 56 sont reçues dans une rainure 62 de la deuxième plaque collectrice 28, formée par un pli ou un embossage 64 de la deuxième plaque collectrice 28. Cette deuxième rainure 62 s'étend sur sensiblement tout le contour de la deuxième plaque collectrice 28. La rainure 62 dans la deuxième plaque collectrice 28 peut recevoir un joint d'étanchéité interposé entre les parois latérales 58, 60 de la deuxième boîte à eau 56 et la deuxième plaque collectrice 28, pour limiter voire éviter toute fuite de liquide hors du volume 57 défini à l'intérieur de la deuxième boîte à eau 56.

Du côté opposé aux parois latérales 58, 60 de la deuxième boîte à eau 56, l'embossage 64 de la deuxième plaque collectrice 28 forme une nervure saillante 66 s'étendant entre les tubes 22 des premier et deuxième faisceau 18, 20 et une extrémité latérale 68, 70 de la deuxième plaque collectrice 28. Cette nervure saillante 66 définit notamment, au niveau de l'extrémité latérale 68 de la deuxième plaque collectrice 28, destinée à être orientée vers l'avant du véhicule (c'est-à-dire, ici, l'extrémité latérale 68 de la deuxième plaque collectrice 28 qui est la plus proche du deuxième faisceau de tubes 20) une gorge 72, qui s'étend entre la nervure saillante 66 et les tubes 22 du deuxième faisceau de tubes 20. Cette gorge 72 s'étend essentiellement selon la direction longitudinale X de la deuxième plaque collectrice 28 et donc perpendiculairement aux tubes 22 du deuxième faisceau de tubes 20.

L'échangeur thermique 12 comporte enfin deux joues latérales 74, 76 s'étendant principalement selon la direction longitudinale Y des tubes 22 des deux faisceaux de tubes 18, 20.

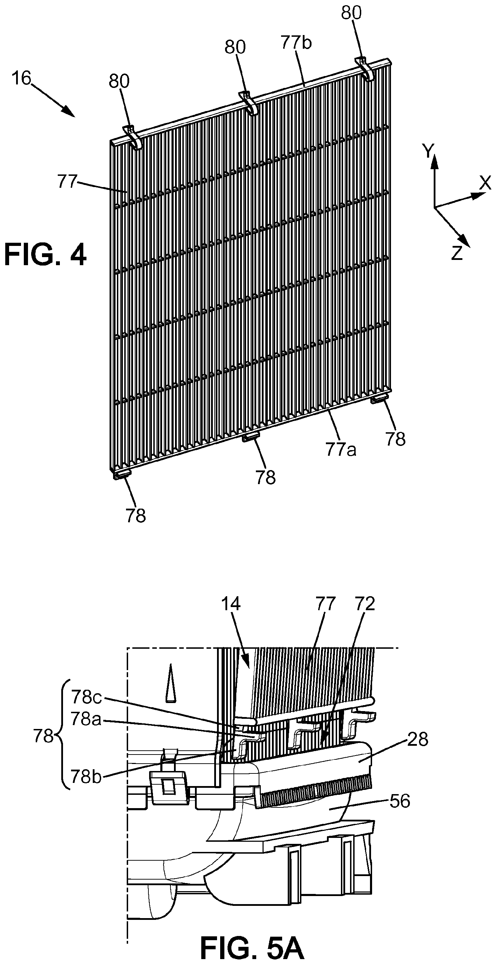

Par ailleurs, le dispositif de protection 14 du dispositif d'échange de chaleur 10 est représenté plus en détails sur la figure 4. Ici, ce dispositif de protection 14 est réalisé sous la forme d'une surface plane ajourée 77, avec des moyens de fixation comprenant des reliefs d'appui 78, à une première extrémité longitudinale 77a de la surface plane ajourée 77, et des reliefs d'emboitage élastique 80, à une seconde extrémité longitudinale 77b de la surface ajourée 77, opposée à la première extrémité longitudinale 77a.

Ici, la surface plane ajourée est réalisée sous forme d'une grille 77. Dans l'exemple représenté, tous les barreaux de la grille 77 sont parallèles, s'étendant selon une direction longitudinale Y correspondant, une fois la grille 77 montée sur l'échangeur thermique 12, à la direction longitudinale Y des tubes 22 des premier et deuxième faisceaux de tubes 18, 20. Avantageusement, la grille 77 comporte autant de barreaux que le deuxième faisceau de tube 20 ne comprend de tubes 18. Ainsi, avantageusement, un barreau de la grille 77 peut être placé en vis-à-vis d'un tube 22 du deuxième faisceau de tubes 20, optimisant ainsi la protection apportée par le dispositif de protection 14. La grille 77 peut notamment être en matériau plastique, par exemple en polyamide ou en polypropylène. Ainsi, la grille 77 peut facilement être réalisée, notamment par moulage. En outre, le poids du dispositif de protection 14 est ainsi limité.

Bien entendu, l'orientation des barreaux peut être choisie différemment, notamment perpendiculaire à la direction longitudinale des tubes 22. Alternativement, la grille peut comporter des barreaux qui ne sont pas parallèles. Notamment, la grille peut comporter des barreaux perpendiculaires, un premier groupe de barreaux s'étendant par exemple parallèlement à la direction longitudinale Y des tubes 22, tandis qu'un deuxième groupe de barreaux s'étend perpendiculairement au premier groupe de barreaux, c'est-à-dire parallèlement à la direction longitudinale X des première et deuxième plaques collectrices 26, 28, une fois la grille 77 montée sur l'échangeur thermique 12.

Les reliefs d'appui 78 sont ici au nombre de trois, sans que ce nombre ne soit limitatif. Les reliefs d'appui 78 sont avantageusement équirépartis sur la longueur de la première extrémité longitudinale 77a de la grille 77. Tels qu'illustrés notamment à la figure 5a, les reliefs d'appui 78 ont sensiblement une forme de « L », avec deux branches 78a, 78b perpendiculaires, un appendice 78c reliant le « L » à la grille 77.

Les reliefs d'emboitage élastique (ou clipsage) 80 sont ici également au nombre de trois, sans que ce nombre ne soit limitatif. Les reliefs d'emboitage élastique 80 sont équirépartis sur la longueur de la deuxième extrémité longitudinale 77b de la grille 77.

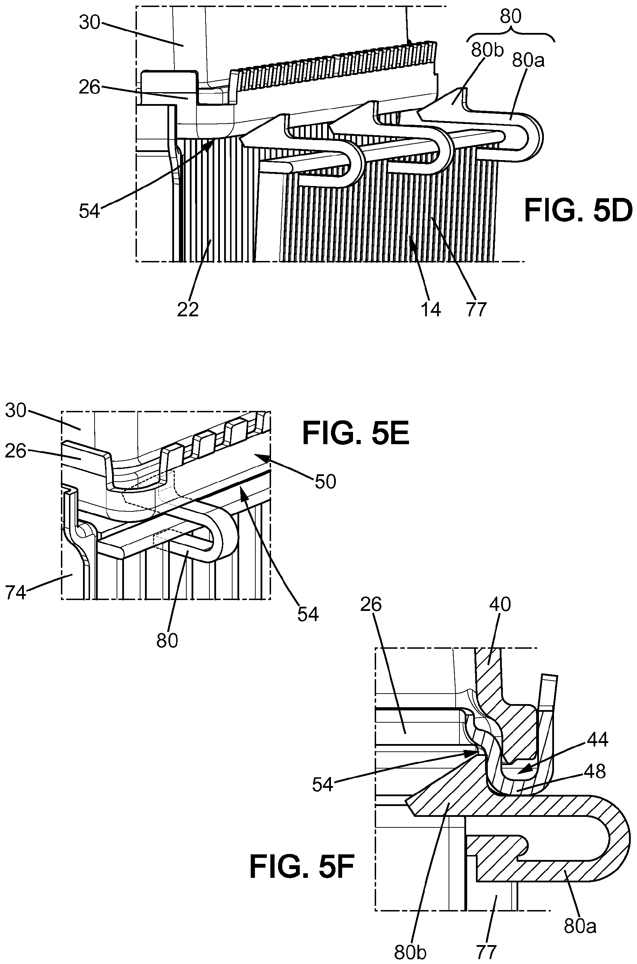

Tels qu'illustrés notamment à la figure 5D, les reliefs d'emboîtage élastique 80 sont formés par des languettes en U 80a, s'étendant depuis une face du dispositif de protection 14 opposée à la face destinée à être en vis-à-vis des tubes 22 de l'échangeur thermique 12. La forme en U des languettes 80a permet une déformation élastique des reliefs d'emboitage élastique 80. Cependant, les languettes 80a s'étendent en partie, en saillie de la face du dispositif de protection 14 destinée à être en vis-à-vis des tubes 22 de l'échangeur thermique 12. Notamment, l'extrémité libre 80b des reliefs d'emboitage élastique 80 s'étend en saillie de cette face du dispositif de protection 14 destinée à être en regard des tubes 22 de l'échangeur thermique 12. Ici, cette extrémité libre 80b prend la forme d'un doigt coudé.

Le dispositif de protection 14 peut être fixé sur l'échangeur thermique 12 en procédant comme illustré aux figures 5A à 5F.

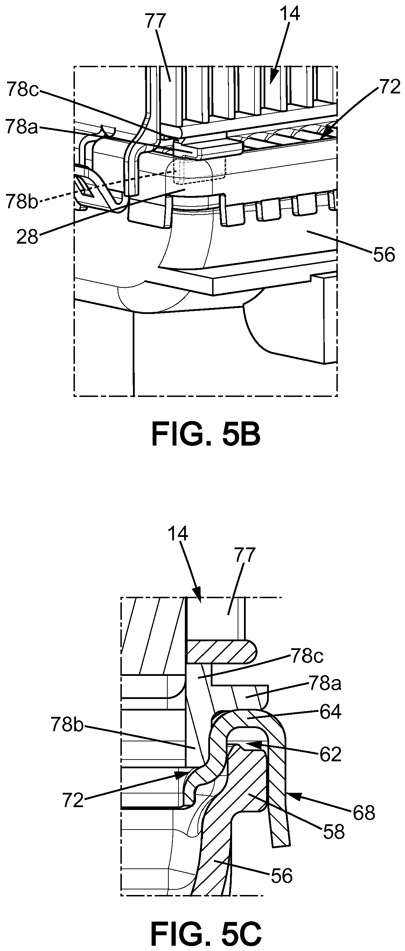

Tout d'abord, comme illustré à la figure 5A, on insert les reliefs d'appui 78 dans la gorge 72 formée par la deuxième plaque collectrice 28. Plus précisément, comme cela est visible sur les figures 5B et 5C, une branche 78a du « L » des reliefs d'appui 78 vient en appui sur la nervure 66 de la deuxième plaque collectrice 28. Ainsi, le dispositif de protection est en butée contre la nervure 66 de la deuxième plaque collectrice 28 dans la direction longitudinale Y des tubes, selon un premier sens. Dans cette position, la deuxième branche 78b du « L » des reliefs d'appui 78 est insérée dans la gorge 72 de la deuxième plaque collectrice 28. De préférence, la deuxième branche 78b du « L » des reliefs d'appui 78 est en contact avec la nervure 66 définissant la gorge 72, de sorte que le dispositif de protection 14 soit en butée contre la nervure 66 de la deuxième plaque collectrice 28, également selon une direction Z, normale aux directions X des plaques collectrices et Y des tubes, selon un sens.

On pivote alors le dispositif de protection 14, comme illustré à la figure 5D, autour d'un axe sensiblement parallèle à la direction longitudinale X de la deuxième plaque collectrice 28, en maintenant les reliefs d'appui 78 en butée contre la nervure 66 de la deuxième plaque collectrice 28. On insère alors en force les doigts coudés 80b des reliefs d'emboitage élastique 80 dans la gorge 54 de la première plaque collectrice 26. Cette insertion en force est réalisée avec déformation élastique de la languette en « U » 80a, jusqu'à atteindre la position des figures 5E et 5F. Sur ces figures, les doigts coudés 80b des reliefs d'emboitage élastique 80 sont reçus en appui dans la gorge 54 de la première plaque collectrice 26, en butée sur la nervure 48 formée par la première plaque collectrice 26. Les doigts coudés 80b sont maintenus dans cette position du fait de l'effort élastique appliqué par les languettes en « U » 80a. Cet effort élastique des languettes en « U » 80a plaque également les reliefs d'appui 78 contre la nervure 64 de la deuxième plaque collectrice 28, notamment dans la gorge 72 de la deuxième plaque collectrice 28.

Il est à noter qu'avantageusement, la deuxième boîte à eau 56 est située en dessous de la première boîte à eau 30, une fois le dispositif d'échange de chaleur 10 monté dans le véhicule automobile. Ainsi, les reliefs d'appui 78 sont également plaqués contre la nervure 64 de la deuxième plaque collectrice 28 par le poids du dispositif de protection 14.

Comme décrit précédemment, la fixation du dispositif de protection 14 est réalisée directement sur les plaques collectrices 26, 28 de l'échangeur thermique 12. Le dispositif de protection 14 peut ainsi être conformé pour ne pas faire saillie latéralement par rapport à l'échangeur thermique 12. Notamment, la grille 77 voire le dispositif de protection 14 a une longueur, mesurée selon la direction longitudinale X des tubes 22, sensiblement égale à la distance entre les plaques collectrices 26, 28.

En l'absence de saillie latérale du dispositif de protection 14 par rapport à l'échangeur thermique 12, une pièce rapportée 16 peut être fixée sur l'échangeur thermique 12, notamment « au-dessus » du dispositif de protection 14, c'est-à-dire de telle sorte que le dispositif de protection 14 se trouve interposé entre l'échangeur thermique 12 et la pièce rapportée 16. La pièce rapportée 16 peut alors s'étendre au moins en partie autour du dispositif de protection 14.

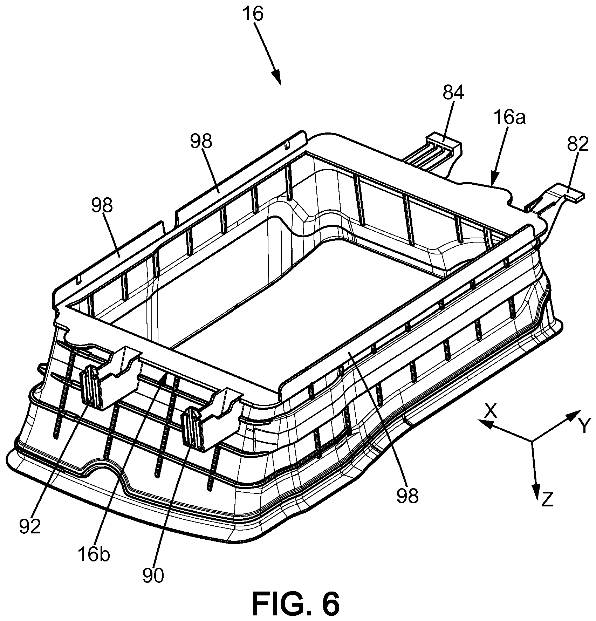

Dans l'exemple illustré, notamment à la figure 6, la pièce rapportée 16 est un guide d'air, ici du type convergent (ci-après dénommé «convergent 16 »). Le convergent 16 est une structure en entonnoir destinée à assurer un plus grand flux d'air à travers les faisceaux de tubes 18, 20. Le convergent 16 est par exemple en plastique, notamment en polyamide ou en polypropylène.

Le convergent 16 présente ici, à une première extrémité longitudinale 16a, deux languettes 82, 84 destinées à être reçues par coulissement selon la direction X, dans des logements 86, 88 complémentaires formés sur la première boîte à eau 26. Chacun des logements 86, 88 est munis d'une surface de butée dans la direction d'insertion des languettes 82, 84. Avantageusement, cette direction d'insertion correspond à la direction du poids du convergent 16, une fois le dispositif d'échange de chaleur 10, monté dans le véhicule automobile, de sorte que ce poids du convergent 16 est supporté par la butée des logements 86, 88.

À la deuxième extrémité longitudinale 16b du convergent 16, celui-ci présente deux reliefs d'emboitage élastique 90, 92 destinés à coopérer avec des reliefs complémentaires 94, 96, formés sur la deuxième boîte à eau 56. Chaque relief d'emboitage élastique 90, 92 prend ici la forme de deux harpons parallèles, symétriques, la tige 90a, 92a de chaque harpon 90, 92 étant suffisamment flexible pour permettre un rapprochement des crochets 90b, 92b aux extrémités, l'un vers l'autre, par déformation élastique desdites tiges 90a, 92a.

Tel qu'illustré, le convergent 16 comporte également des bords latéraux 98 rabattus en direction du dispositif de protection 14 et destinés à coopérer avec le dispositif de protection 14 pour limiter les mouvements relatifs du convergent 16 par rapport au dispositif de protection 14. Ici, les bords latéraux rabattus 98 coopèrent avec les bords longitudinaux de la grille 77.

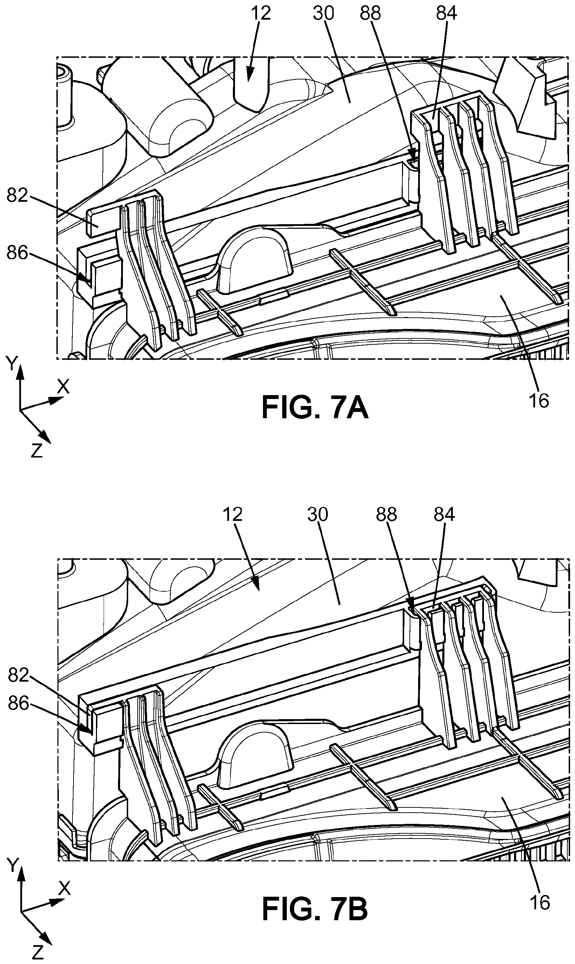

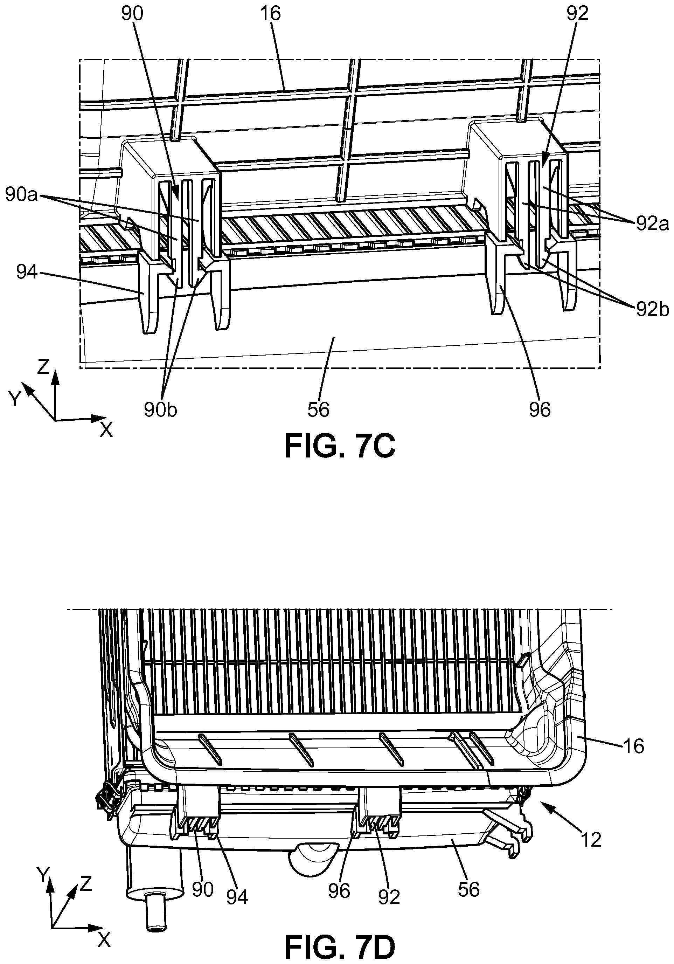

Le convergent 16 peut être fixé sur le dispositif d'échange thermique 12 comme illustré par les figures 7A à 7D.

Tout d'abord, comme illustré par les figures 7A et 7B, on insère les languettes 82, 84 du convergent dans les logements complémentaires 86, 88 de la première boîte à eau 30 selon la direction d'insertion. L'insertion des languettes 86, 88 est réalisée jusqu'à ce que ces languettes 86, 88 soient en butée selon la direction d'insertion, contre les butée des logements complémentaires 86, 88.

Une fois les languettes 82, 84 insérées, les reliefs d'emboitage élastique 90, 92 du convergent 16 sont sensiblement en vis-à-vis des reliefs complémentaires 94, 96 de la deuxième boîte à eau 56. On exerce alors une pression sur la deuxième extrémité longitudinale 16b du convergent 16 pour emboiter les reliefs d'emboitage élastique 90, 92 du convergent dans les reliefs complémentaires 94, 96 de la deuxième boîte à eau 56. Il est à noter ici que la pression sur la deuxième extrémité 16b du convergent est exercée selon une direction Z normale au plan de la grille 77. En effet, la fixation au moyen des reliefs d'emboitage élastique 90, 92 vise essentiellement à maintenir le convergent 16 à proximité voire au contact de la grille 77. La position du convergent 16 en face de la grille 77 est quant à elle essentiellement assurée par la réception des languettes 82, 84 en butée dans les logements complémentaires 86, 88 de la première boîte à eau 30.

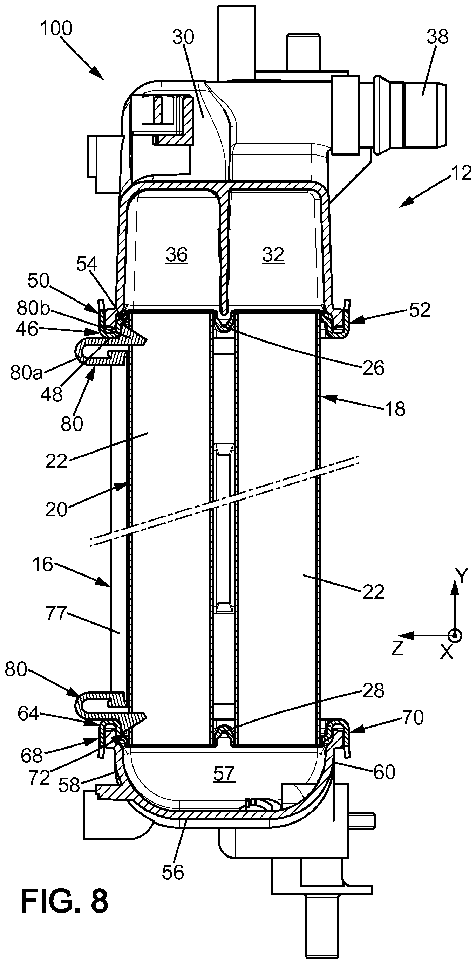

La figure 8 illustre un deuxième exemple de dispositif d'échange de chaleur 100. Ce dispositif d'échange de chaleur 100 se distingue du premier exemple 10 essentiellement en ce que le dispositif de protection 14 est dépourvu de reliefs d'appui 78. À chacune de ses extrémités longitudinales 77a, 77b, la grille 77 est munie de reliefs d'emboitage élastique 80, semblables à ceux du premier exemple 10.

Dans ce cas, la fixation du dispositif de protection 14 comporte une étape consistant à emboîter élastiquement les reliefs d'emboitage élastique 80 dans la gorge 54 de la première plaque collectrice 26 et dans la gorge 72 de la deuxième plaque collectrice 28. L'insertion des reliefs d'emboitage élastique 80 dans les gorges 54, 72 des première et deuxième plaques collectrices 26, 28 peut être réalisée de manière sensiblement simultanée. Par sensiblement simultanée, on entend ici que l'insertion est réalisée dans un même temps, par exemple par un mouvement du dispositif de protection 14 vers l'échangeur thermique 12, selon une direction Z sensiblement normale à un plan défini par les directions longitudinales X, Y des plaques collectrices 26, 28 et des tubes 22.

L'invention n'est pas limitée aux seuls modes de réalisation décrits ci-avant. Au contraire, elle est susceptible de nombreuses variantes accessibles à l'homme de l'art.

Notamment, le montage du dispositif de protection et/ou de la pièce rapportée peut être réalisé de manière symétrique, en intervertissant le rôle des première et deuxième plaques collectrices.

Par ailleurs, la pièce rapportée peut être fixée sur l'échangeur thermique par emboitage élastique uniquement. Il suffit pour cela de remplacer les languettes de l'exemple décrit par des reliefs d'emboitage élastique.

Cette pièce rapportée peut ne pas être un guide d'air, mais, par exemple, un cadre ou un élément de support, notamment en plastique, pour maintenir un composant ou un échangeur thermique.

Également, dans l'exemple décrit, le dispositif de protection comporte une grille. En variante, le dispositif de protection peut être réalisé sous toute forme accessible à l'homme de l'art, tant qu'il présente des jours permettant le passage d'une partie au moins du flux d'air F créé par le déplacement du véhicule. De préférence, les jours du dispositif de protection s'étendent parallèlement aux tubes, les jours étant, de préférence encore, décalés par rapport aux tubes, dans une direction parallèle à la direction longitudinale de la première et/ou de la deuxième plaque collectrice.

Enfin, dans les exemples décrits, l'échangeur thermique est un échangeur thermique à deux passes méthodiques. L'échangeur thermique comprend donc deux faisceaux de tubes coplanaires. Alternativement, l'échangeur thermique peut ne comprendre qu'un seul faisceau de tube ou plus de deux faisceaux de tubes.

## Revendications

1. Dispositif d'échange de chaleur (10 ; 100) pour véhicule automobile comprenant :
- un échangeur thermique (12), avec
∘ une première plaque collectrice (26) et une deuxième plaque collectrice (28), s'étendant principalement selon une direction longitudinale (X),
∘ une première boîte à eau (30), fixée sur la première plaque collectrice (26), et une deuxième boîte à eau (56), fixée sur la deuxième plaque collectrice (28), et
∘ au moins un faisceau (18 ; 20) de tubes (22) s'étendant entre les première et deuxième plaques collectrices (30 ; 56) selon une direction longitudinale (Y) des tubes (22),
∘ chacune de la première et de la deuxième plaque collectrice (30 ; 56) formant, entre les tubes (22) du faisceau de tubes (18 ; 20) et une extrémité latérale (50 : 68) de la plaque collectrice respective (30 ; 56), une gorge (54 ; 72) s'étendant sensiblement selon la direction longitudinale (X) de la plaque collectrice respective (30 ; 56), perpendiculairement à la direction longitudinale (Y) des tubes (22), et
- un dispositif (14) de protection des tubes (22) du faisceau de tubes (18 ; 20), ajouré, comprenant des moyens de fixation (78, 80) sur l'échangeur thermique (12), **caractérisé en ce que** les moyens de fixation (78, 80) prennent appui à l'intérieur des gorges (54, 72) formées par les première et deuxième plaques collectrices (26 ; 28).

2. Dispositif d'échange de chaleur selon la revendication 1, dans lequel les moyens de fixation comprennent au moins un relief d'emboîtage élastique (80) reçu dans l'une parmi la gorge (54) de la première plaque collectrice (26) et la gorge (72) de la deuxième plaque collectrice (28), les moyens de fixation comprenant de préférence une pluralité de tels reliefs d'emboîtage élastique (80) reçus dans l'une parmi la gorge (54) de la première plaque collectrice (26) et la gorge (72) de la deuxième plaque collectrice (28), lesdits reliefs d'emboîtage élastique (80) étant de préférence encore équirépartis.

3. Dispositif d'échange de chaleur (100) selon la revendication 2, dans lequel les moyens de fixation comprennent également au moins un relief d'emboitage élastique (80) reçu dans l'autre parmi la gorge (54) de la première plaque collectrice (26) et la gorge (72) de la deuxième plaque collectrice (28), les moyens de fixation comprenant de préférence une pluralité de tels reliefs d'emboîtage élastique (80) reçus dans l'autre parmi la gorge (54) de la première plaque collectrice (26) et la gorge (72) de la deuxième plaque collectrice (28), lesdits reliefs d'emboîtage élastiques (80) étant de préférence encore équirépartis.

4. Dispositif d'échange de chaleur (10) selon la revendication 2, dans lequel les moyens de fixation comprennent également au moins un relief d'appui (78) reçu en appui dans l'autre parmi la gorge (54) de la première plaque collectrice (26) et la gorge (72) de la deuxième plaque collectrice (28), les moyens de fixation comprenant de préférence une pluralité de tels reliefs d'appui (78) reçus dans l'autre parmi la gorge (54) de la première plaque collectrice (26) et la gorge (72) de la deuxième plaque collectrice (28), les reliefs d'emboîtage élastiques (78) étant de préférence encore équirépartis.

5. Dispositif d'échange de chaleur selon l'une des revendications 1 à 4, dans lequel le dispositif de protection (14) a des jours, les jours s'étendant parallèlement aux tubes (22) du faisceau de tubes (18 ; 20), les jours étant, de préférence, décalés par rapport aux tubes (22), dans une direction parallèle à la direction longitudinale (X) de la première et/ou de la deuxième plaque collectrice (26 ; 28).

6. Dispositif d'échange de chaleur selon l'une quelconque des revendications précédentes, dans lequel le dispositif de protection (14) comporte une grille (77), la grille (77) ayant de préférence des barreaux, la grille (77) comportant de préférence encore des barreaux s'étendant selon une direction parallèle aux tubes (22) et/ou des barreaux s'étendant perpendiculairement à la direction des tubes (22).

7. Dispositif d'échange de chaleur selon la revendication 6, dans lequel la grille (77) comporte autant de barreaux s'étendant parallèlement aux tubes (22), que le faisceau de tubes (18 ; 20) ne comporte de tubes (22).

8. Dispositif d'échange de chaleur selon l'une quelconque des revendications précédentes, comprenant en outre une pièce rapportée (16) s'étendant au moins en partie autour du dispositif de protection (14).

9. Dispositif d'échange de chaleur selon la revendication 8, dans lequel la pièce rapportée est un guide d'air, notamment un guide d'air du type convergent (16).

10. Dispositif d'échange de chaleur selon la revendication 8 ou 9, dans lequel la pièce rapportée (16) est fixée sur la première et/ou la deuxième boîte à eau (30 ; 56).

11. Dispositif d'échange de chaleur selon la revendication 10, dans lequel la pièce rapportée (16) comporte des reliefs (90 ; 92) d'emboîtage élastique sur la première et/ou la deuxième boîte à eau (30 ; 56), la première et/ou la deuxième boîte à eau (90 ; 92) comportant de préférence des reliefs (94 ; 96) complémentaires auxdits reliefs d'emboîtage élastique (90 ; 92).

12. Dispositif d'échange de chaleur selon l'une quelconque des revendications précédentes, dans lequel le dispositif de protection (14) et/ou la pièce rapportée (16), le cas échéant, est/sont en matière plastique, notamment en polyamide ou en polypropylène.

13. Procédé d'assemblage d'un dispositif d'échange de chaleur (10) selon l'une quelconque des revendications précédentes, comprenant une étape de fixation du dispositif de protection (14), à l'intérieur des gorges (54 ; 72) formées par les première et deuxième plaques collectrices (26 ; 28).

14. Procédé d'assemblage selon la revendication 13, la revendication 3 s'appliquant, dans lequel l'étape de fixation du dispositif de protection (14) comporte une étape consistant à emboîter élastiquement les reliefs d'emboitage élastique (80) dans la gorge (54) de la première plaque collectrice (26) et dans la gorge (72) de la deuxième plaque collectrice (28), de préférence de manière sensiblement simultanée.

15. Procédé d'assemblage selon la revendication 13, la revendication 4 s'appliquant, dans lequel l'étape de fixation du dispositif de protection (14) comporte une première étape d'insertion des reliefs d'appui (78) dans la gorge (54 ; 72) de l'une parmi la première plaque collectrice (26) et la deuxième plaque collectrice (28), puis une étape de pivotement du dispositif de protection (14), et enfin une étape d'emboîtage élastique des reliefs d'emboitage élastique (80) dans la gorge (54 ; 72) de l'autre parmi la première plaque collectrice (26) et la deuxième plaque collectrice (28).

16. Procédé d'assemblage selon l'une des revendications 13 à 15, comportant en outre une étape de fixation d'une pièce rapportée (16), notamment d'un guide d'air, sur les boîtes à eau (30 ; 56), la pièce rapportée (16) étant de préférence fixée au moins en partie par emboîtement élastique sur l'une des boîtes à eau (30 ; 56).

## Patentansprüche

1. Wärmetauschvorrichtung (10; 100) für ein Kraftfahrzeug, welche umfasst:
- einen Wärmeaustauscher (12), mit
∘ einer ersten Sammelplatte (26) und einer zweiten Sammelplatte (28), die sich hauptsächlich in einer Längsrichtung (X) erstrecken,
∘ einem ersten Wasserkasten (30), der an der ersten Sammelplatte (26) befestigt ist, und einem zweiten Wasserkasten (56), der an der zweiten Sammelplatte (28) befestigt ist, und
∘ wenigstens einem Bündel (18; 20) von Rohren (22), die sich zwischen der ersten und der zweiten Sammelplatte (30; 56) in einer Längsrichtung (Y) der Rohre (22) erstrecken,
∘ wobei die erste und die zweite Sammelplatte (30; 56) jeweils zwischen den Rohren (22) des Rohrbündels (18; 20) und einem seitlichen Ende (50; 68) der jeweiligen Sammelplatte (30; 56) eine Rille (54; 72) bilden, die sich im Wesentlichen in der Längsrichtung (X) der jeweiligen Sammelplatte (30; 56) erstreckt, senkrecht zur Längsrichtung (Y) der Rohre (22), und
- eine Vorrichtung (14) zum Schutz der Rohre (22) des Rohrbündels (18; 20), die durchbrochen ist und Mittel zur Befestigung (78, 80) am Wärmeaustauscher (12) umfasst, **dadurch gekennzeichnet, dass** sich die Befestigungsmittel (78, 80) am Inneren der Rillen (54, 72) abstützen, die von der ersten und der zweiten Sammelplatte (26; 28) gebildet werden.

2. Wärmetauschvorrichtung nach Anspruch 1, wobei die Befestigungsmittel wenigstens ein Profil zum elastischen Einstecken (80) umfassen, das in einer von der Rille (54) der ersten Sammelplatte (26) und der Rille (72) der zweiten Sammelplatte (28) aufgenommen ist, wobei die Befestigungsmittel vorzugsweise mehrere derartige Profile zum elastischen Einstecken (80) umfassen, die in einer von der Rille (54) der ersten Sammelplatte (26) und der Rille (72) der zweiten Sammelplatte (28) aufgenommen sind, wobei die Profile zum elastischen Einstecken (80) vorzugsweise außerdem gleichmäßig verteilt sind.

3. Wärmetauschvorrichtung (100) nach Anspruch 2, wobei die Befestigungsmittel außerdem wenigstens ein Profil zum elastischen Einstecken (80) umfassen, das in der anderen von der Rille (54) der ersten Sammelplatte (26) und der Rille (72) der zweiten Sammelplatte (28) aufgenommen ist, wobei die Befestigungsmittel vorzugsweise mehrere derartige Profile zum elastischen Einstecken (80) umfassen, die in der anderen von der Rille (54) der ersten Sammelplatte (26) und der Rille (72) der zweiten Sammelplatte (28) aufgenommen sind, wobei die Profile zum elastischen Einstecken (80) vorzugsweise außerdem gleichmäßig verteilt sind.

4. Wärmetauschvorrichtung (10) nach Anspruch 2, wobei die Befestigungsmittel außerdem wenigstens ein Stützprofil (78) umfassen, das in der anderen von der Rille (54) der ersten Sammelplatte (26) und der Rille (72) der zweiten Sammelplatte (28) abstützend aufgenommen ist, wobei die Befestigungsmittel vorzugsweise mehrere derartige Stützprofile (78) umfassen, die in der anderen von der Rille (54) der ersten Sammelplatte (26) und der Rille (72) der zweiten Sammelplatte (28) aufgenommen sind, wobei die Profile zum elastischen Einstecken (78) vorzugsweise außerdem gleichmäßig verteilt sind.

5. Wärmetauschvorrichtung nach einem der Ansprüche 1 bis 4, wobei die Schutzvorrichtung (14) Durchbrüche aufweist, wobei sich die Durchbrüche parallel zu den Rohren (22) des Rohrbündels (18; 20) erstrecken, wobei die Durchbrüche vorzugsweise bezüglich der Rohre (22) in einer zur Längsrichtung (X) der ersten und/oder der zweiten Sammelplatte (26; 28) parallelen Richtung versetzt sind.

6. Wärmetauschvorrichtung nach einem der vorhergehenden Ansprüche, wobei die Schutzvorrichtung (14) ein Gitter (77) aufweist, wobei das Gitter (77) vorzugsweise Stäbe hat, wobei das Gitter (77) vorzugsweise außerdem Stäbe aufweist, die sich in einer zu den Rohren (22) parallelen Richtung erstrecken, und/oder Stäbe, die sich senkrecht zur Richtung der Rohre (22) erstrecken.

7. Wärmetauschvorrichtung nach Anspruch 6, wobei das Gitter (77) ebenso viele Stäbe aufweist, die sich parallel zu den Rohren (22) erstrecken, wie das Rohrbündel (18; 20) Rohre (22) aufweist.

8. Wärmetauschvorrichtung nach einem der vorhergehenden Ansprüche, welche außerdem ein Anbauteil (16) umfasst, das sich wenigstens teilweise um die Schutzvorrichtung (14) herum erstreckt.

9. Wärmetauschvorrichtung nach Anspruch 8, wobei das Anbauteil eine Luftführung ist, insbesondere eine Luftführung vom konvergenten Typ (16).

10. Wärmetauschvorrichtung nach Anspruch 8 oder 9, wobei das Anbauteil (16) am ersten und/oder am zweiten Wasserkasten (30; 56) befestigt ist.

11. Wärmetauschvorrichtung nach Anspruch 10, wobei das Anbauteil (16) Profile (90; 92) zum elastischen Einstecken am ersten und/oder am zweiten Wasserkasten (30; 56) aufweist, wobei der erste und/oder der zweite Wasserkasten (90; 92) vorzugsweise Profile (94; 96) aufweisen, die zu den Profilen zum elastischen Einstecken (90; 92) komplementär sind.

12. Wärmetauschvorrichtung nach einem der vorhergehenden Ansprüche, wobei die Schutzvorrichtung (14) und/oder gegebenenfalls das Anbauteil (16) aus Kunststoff hergestellt ist/sind, insbesondere aus Polyamid oder aus Polypropylen.

13. Verfahren zum Zusammenbau einer Wärmetauschvorrichtung (10) nach einem der vorhergehenden Ansprüche, welches einen Schritt der Befestigung der Schutzvorrichtung (14) im Inneren der Rillen (54; 72) umfasst, die von der ersten und der zweiten Sammelplatte (26; 28) gebildet werden.

14. Verfahren zum Zusammenbau nach Anspruch 13, wobei Anspruch 3 angewendet wird, wobei der Schritt der Befestigung der Schutzvorrichtung (14) einen Schritt umfasst, der darin besteht, die Profile zum elastischen Einstecken (80) elastisch in die Rille (54) der ersten Sammelplatte (26) und in die Rille (72) der zweiten Sammelplatte (28) einzustecken, vorzugsweise im Wesentlichen gleichzeitig.

15. Verfahren zum Zusammenbau nach Anspruch 13, wobei Anspruch 4 angewendet wird, wobei der Schritt der Befestigung der Schutzvorrichtung (14) einen ersten Schritt des Einsetzens der Stützprofile (78) in die Rille (54; 72) einer von der ersten Sammelplatte (26) und der zweiten Sammelplatte (28), dann einen Schritt des Schwenkens der Schutzvorrichtung (14) und schließlich einen Schritt des elastischen Einsteckens der Profile zum elastischen Einstecken (80) in die Rille (54; 72) der anderen von der ersten Sammelplatte (26) und der zweiten Sammelplatte (28) umfasst.

16. Verfahren zum Zusammenbau nach einem der Ansprüche 13 bis 15, welches außerdem einen Schritt der Befestigung eines Anbauteils (16), insbesondere einer Luftführung, an den Wasserkästen (30; 56) umfasst, wobei das Anbauteil (16) vorzugsweise wenigstens teilweise durch elastisches Einstecken an einem der Wasserkästen (30; 56) befestigt wird.

## Claims

1. Heat exchange device (10; 100) for a motor vehicle including:
- a heat exchanger (12) with
∘ a first collector plate (26) and a second collector plate (28) extending mainly in a longitudinal direction (X),
∘ a first header box (30) attached to the first collector plate (26) and a second header box (56) attached to the second collector plate (28), and
∘ at least one bundle (18; 20) of pipes (22) extending between the first and second collector plates (30; 56) in a longitudinal direction (Y) of the pipes (22),
∘ each of the first and second collector plates (30; 56) forming a groove (54; 72) between the pipes (22) of the pipe bundle (18; 20) and a lateral end (50 : 68) of the respective collector plate (30; 56), said groove (54; 72) extending substantially in the longitudinal direction (X) of the respective collector plate (30; 56), perpendicular to the longitudinal direction (Y) of the pipes (22), and
- a perforated protection device (14) for the pipes (22) in the pipe bundle (18; 20), including attachment means (78, 80) to the heat exchanger (12), **characterized in that** the attachment means (78, 80) bear against the inside of the grooves (54, 72) formed by the first and second collector plates (26; 28) .

2. Heat exchange device according to Claim 1, in which the attachment means include at least one elastic fitting relief (80) that fits into either the groove (54) of the first collector plate (26) or the groove (72) of the second collector plate (28), the attachment means preferably including a plurality of such elastic fitting reliefs (80) fitting into either the groove (54) of the first collector plate (26) or the groove (72) of the second collector plate (28), said elastic fitting reliefs (80) also preferably being evenly distributed.

3. Heat exchange device (100) according to Claim 2, in which the attachment means also include at least one elastic fitting relief (80) that fits into the other of either the groove (54) of the first collector plate (26) or the groove (72) of the second collector plate (28), the attachment means preferably including a plurality of such elastic fitting reliefs (80) fitting into the other of either the groove (54) of the first collector plate (26) or the groove (72) of the second collector plate (28), said elastic fitting reliefs (80) also preferably being evenly distributed.

4. Heat exchange device (10) according to Claim 2, in which the attachment means also include at least one bearing relief (78) that fits bearingly into the other of either the groove (54) of the first collector plate (26) or the groove (72) of the second collector plate (28), the attachment means preferably including a plurality of such bearing reliefs (78) fitting into the other of either the groove (54) of the first collector plate (26) or the groove (72) of the second collector plate (28), the elastic fitting reliefs (78) also preferably being evenly distributed.

5. Heat exchange device according to one of Claims 1 to 4, in which the protection device (14) has openings, the openings extending parallel to the pipes (22) of the pipe bundle (18; 20), the openings preferably being offset in relation to the pipes (22) in a direction parallel to the longitudinal direction (X) of the first and/or second collector plate (26; 28).

6. Heat exchange device according to any one of the preceding claims, in which the protection device (14) includes a grille (77), the grille (77) preferably having bars, the grille (77) more preferably having bars extending in a direction parallel to the pipes (22) and/or bars extending perpendicular to the direction of the pipes (22).

7. Heat exchange device according to Claim 6, in which the grille (77) has as many bars extending parallel to the pipes (22) as there are pipes (22) in the pipe bundle (18; 20).

8. Heat exchange device according to any one of the preceding claims, also including an attached part (16) extending at least partially about the protection device (14) .

9. Heat exchange device according to Claim 8, in which the attached part is an air guide, notably a convergent air guide (16).

10. Heat exchange device according to Claim 8 or 9, in which the attached part (16) is attached to the first and/or second header box (30; 56).

11. Heat exchange device according to Claim 10, in which the attached part (16) has elastic fitting reliefs (90; 92) on the first and/or second header box (30; 56), the first and/or second header box (90; 92) preferably having reliefs (94; 96) that match said elastic fitting reliefs (90; 92).

12. Heat exchange device according to any one of the preceding claims, in which the protection device (14) and/or the attached part (16), where applicable, is/are made of plastic, notably of polyamide or polypropylene.

13. Assembly method for a heat exchange device (10) according to any one of the preceding claims, including a step for attaching the protection device (14) to the inside of the grooves (54; 72) formed by the first and second collector plates (26; 28).

14. Assembly method according to Claim 13, with reference to Claim 3, in which the attachment step for the protection device (14) includes a step that involves elastically fitting the elastic fitting reliefs (80) into the groove (54) of the first collector plate (26) and into the groove (72) of the second collector plate (28), preferably substantially simultaneously.

15. Assembly method according to Claim 13, with reference to Claim 4, in which the attachment step for the protection device (14) includes a first step in which the bearing reliefs (78) are inserted into the groove (54; 72) of either the first collector plate (26) or the second collector plate (28), then a step in which the protection device (14) is pivoted, and finally a step in which the elastic fitting reliefs (80) are elastically fitted into the groove (54; 72) of the other of either the first collector plate (26) or the second collector plate (28).

16. Assembly method according to one of Claims 13 to 15, also including a step in which an attached part (16), notably an air guide, is attached to the header boxes (30; 56), the attached part (16) preferably being attached at least in part by elastic fitting to one of the header boxes (30; 56).
